# EUROPÄISCHE PATENTSCHRIFT

(11) **EP 3 363 105 B1**
(45) Veröffentlichungstag und Bekanntmachung des Hinweises auf die Patenterteilung: **07.07.2021**
(21) Anmeldenummer: 16779125.0
(22) Anmeldetag: 11.10.2016
(51) Int. Cl.: H02K 11/33

(54) **PLATINE, B-LAGERSCHILD, MOTORBAUSATZ UND ELEKTROMOTOR**
CIRCUIT BOARD, NON-DRIVE END SHIELD, MOTOR KIT, AND ELECTRIC MOTOR
CARTE, FLASQUE DE PALIER CÔTÉ B, JEU DE PIÈCES DE MOTEUR ET MOTEUR ÉLECTRIQUE

(30) Priorität: 13.10.2015 DE 102015219867
(43) Veröffentlichungstag der Anmeldung: 22.08.2018
(73) Patentinhaber: Lenze Drives GmbH, 32699 Extertal (DE)
(72) Erfinder: WETTLAUFER, Jan, 97084 Würzburg (DE); HÜBNER, Karsten, 31855 Aerzen (DE); EHLICH, Martin, 32689 Kalletal (DE)
(74) Vertreter: Patentanwälte Ruff, Wilhelm, Beier, Dauster & Partner mbB
(86) Internationale Anmeldenummer: PCT/EP2016/074377
(87) Internationale Veröffentlichungsnummer: WO 2017/064080

(56) Entgegenhaltungen:
- EP-A1- 0 766 366
- EP-A1- 2 629 404
- WO-A2-2014/124975
- DE-A1-102004 031 399
- DE-A1-102010 017 519
- DE-A1-102010 038 991
- JP-A- S60 141 147
- US-A1- 2015 029 672
- HOFMANN M ET AL: "Modular inverter power electronic for intelligent e-drives", ELECTRIC DRIVES PRODUCTION CONFERENCE (EDPC), 2012 2ND INTERNATIONAL, IEEE, 15. Oktober 2012 (2012-10-15), Seiten 1-6, XP032322629, DOI: 10.1109/EDPC.2012.6425132 ISBN: 978-1-4673-3007-7
- ERIK C W DE JONG ET AL: "Design Techniques for Thermal Management in Switch Mode Converters", IEEE TRANSACTIONS ON INDUSTRY APPLICATIONS, IEEE SERVICE CENTER, PISCATAWAY, NJ, US, Bd. 42, Nr. 6, 1. November 2006 (2006-11-01), Seiten 1375-1386, XP011150197, ISSN: 0093-9994, DOI: 10.1109/TIA.2006.882674

## Beschreibung

Die Erfindung betrifft ein B-Lagerschild für einen Elektromotor. Außerdem betrifft die Erfindung einen Motorbausatz und einen Elektronikmotor.

Elektromotoren werden heutzutage für eine Vielzahl von Aufgaben verwendet. Insbesondere können auch hochintegrierte Antriebe verwendet werden, bei welchen beispielsweise Motor und Leistungselektronik in ein Gehäuse integriert sein können. Solche Elektromotoren werden auch als Elektronikmotoren bezeichnet.

Bei aus dem Stand der Technik bekannten Elektronikmotoren hat es sich gezeigt, dass eine Reihe von Problemen existiert, welche nachfolgend genannt werden.

Integrationskonzepte in Smart Stator Tooth(SST)-Bauform benötigen Steckverbinder zwischen den Leistungsmodulen und ihrer Zentralplatine, welche fehleranfällig sind.

Es ist bisher nicht möglich, einen Elektromotor zu konstruieren, welcher mit zwei unterschiedlichen B-Lagerschildern ausrüstbar ist, so dass dieser entweder als Motor ohne Leistungselektronik oder als hochintegrierter Antrieb (Elektronikmotor) gefertigt werden kann. Der Unterschied zwischen einem Motor und einem hochintegrierten Antrieb ist für den Kunden somit klar zu erkennen. Dies liegt an sichtbarer Elektronik, welche einen unzuverlässigen Eindruck erweckt und deshalb zu einer verminderten Akzeptanz von Elektronikmotoren am Markt führt.

Viele Komponenten bestehender hochintegrierter Antriebe können nicht auf existierenden Fertigungseinrichtungen wie beispielsweise Bestückungsautomaten automatisiert gefertigt werden. Dies erhöht die Fertigungskosten.

Bestehende hochintegrierte Antriebe bestehen typischerweise aus sehr vielen einzelnen Komponenten. Etliche dieser Komponenten sind Spezialteile wie beispielsweise ein zentraler Ringkondensator mit Busbar, welcher keine einfach zu beschaffende Standardkomponente darstellt.

Die bisher verfügbaren Integrationskonzepte nutzen den im B-Lagerschild verfügbaren Bauraum nicht ideal aus, wodurch die Antriebe größer als eigentlich nötig sind. Dies ist nachteilig, da in fast allen Applikationen Antriebe mit einer hohen Leistungs- und Drehmomentdichte besser integrierbar sind.

Bisherige Integrationskonzepte benötigen mehrere Komponenten, welche nur durch 3D-CNC-Fräsen herstellbar sind. Eine Serienfertigung auf 5-Achs-CNC-Bearbeitungszentren und die zugehörige Serien-Qualitätskontrolle auf Koordinatenmesstastern ist jedoch aufwändig und somit teuer.

Leistungsmodule müssen zur Vermeidung von EMV-Problemen niederimpedant mit dem Zwischenkreiskondensator verbunden werden, was nur bei einem geringen räumlichen Abstand realisierbar ist. In bisherigen Integrationskonzepten wird dies mit einem Ringkondensator erreicht. Dieser ist jedoch aufwändig zu fertigen und zu montieren, da jedes Leistungsmodul einzeln mit zwei Befestigungselementen wie beispielsweise Schrauben an ihn angeschlossen werden muss.

Ein Verguss der Elektronik bisheriger Integrationskonzepte ist nicht möglich, da diese sich nicht in einem geschlossenen Bauraum befindet. Dadurch müssen separate, teure und letztendlich fehleranfällige Dichtelemente eingesetzt werden, um die erforderliche Schutzklasse zu erreichen.

Die DE 10 2010 017 519 A1 zeigt eine Motorvorrichtung mit integrierter elektronischer Schaltung, bei der in ein Lagerschild des Motors eine Platine integriert ist, wobei die Platine in einen Zentralbereich und eine Anzahl den Zentralbereich umgebende Zahnbereiche unterteilt ist, wobei Ebenen der Zahnbereiche gegenüber einer Ebene des Zentralbereichs in einer Einbaustellung abgewinkelt sind.

Die US 2015/0029672 A1 zeigt eine Platine, wobei die Platine in einen Zentralbereich und eine Anzahl den Zentralbereich umgebende Zahnbereiche unterteilt ist, wobei Ebenen der Zahnbereiche gegenüber einer Ebene des Zentralbereichs in einer Einbaustellung abgewinkelt sind.

Es ist deshalb eine Aufgabe der Erfindung, Maßnahmen vorzusehen, welche insbesondere eines oder mehrere der vorstehend beschriebenen Probleme lösen.

Dies wird erfindungsgemäß durch ein B-Lagerschild nach Anspruch 1, einen Motorbausatz nach Anspruch 7 und einen Elektromotor nach Anspruch 8 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft ein B-Lagerschild eines Elektromotors, in das eine Platine integriert ist. Auf der Platine ist ein Umrichter ausgebildet bzw. angeordnet. Der Umrichter kann beispielsweise eine Halbbrücke oder einen Vollbrücke aufweisen. Außerdem ist die Platine in einen Zentralbereich und eine Anzahl den Zentralbereich umgebende Zahnbereiche unterteilt, wobei Ebenen der Zahnbereiche gegenüber einer Ebene des Zentralbereichs in einer Einbaustellung abgewinkelt sind.

Mittels einer solchen Platine kann ein Umrichter in das B-Lagerschild eines Elektromotors integriert werden, wodurch zumindest einige der weiteren oben beschriebenen Probleme gelöst werden können. Es können mehrere Umrichter auf der Platine vorgesehen sein, die gemeinsam einen Mehrphasenumrichter bilden.

Der Zentralbereich kann insbesondere eine Zentralplatine sein. Ebenso können die Zahnbereiche jeweilige Zahnplatinen sein. Unter einer Platine kann dabei insbesondere eine Struktur mit einem Trägermaterial und aufgebrachten Leiterbahnen sowie Bauelementen verstanden werden.

Die Platine weist Biegestellen zwischen dem Zentralbereich und den jeweiligen Zahnbereichen auf, wobei ein jeweiliger Zahnbereich mittels der zugehörigen Biegestelle zwischen einem gestreckten Zustand, in welchem die Ebene des jeweiligen Zahnbereichs parallel zur Ebene des Zentralbereichs ist, und einem abgewinkelten Zustand, in welchem die Ebene des jeweiligen Zahnbereichs quer zur Ebene des Zentralbereichs steht, bewegbar ist.

Dies erlaubt eine Variabilität hinsichtlich der Orientierung der Zahnbereiche zum Zentralbereich, wobei beispielsweise vorteilhafte Fertigungsverfahren realisiert werden können. Insbesondere ist es möglich, zur Fertigung Zahnbereiche und Zentralbereich parallel zu lassen, um diese zusammen wie eine einzige Platine bearbeiten bzw. bestücken zu können. Beim Einbringen der Platine in das B-Lagerschild können dann vorteilhaft die Zahnbereiche umklappen, wobei typischerweise auf eine separate Auslösung des Umklappens verzichtet werden kann, da typische B-Lagerschilder derart ausgeführt sind, dass die Zahnbereiche beim Einbringen der Platine in das B-Lagerschild automatisch umklappen.

Auf einem jeweiligen Zahnbereich können bevorzugt ein Zwischenkreiskondensator und/oder ein Leistungsmodul angeordnet sein. Zwischenkreiskondensator und Leistungsmodul sind dabei vorzugsweise auf gegenüberliegenden Seiten des jeweiligen Zahnbereichs an gleicher Position angeordnet. Dies ermöglicht eine besonders vorteilhafte Nähe von Zwischenkreiskondensator und Leistungsmodul, so dass die aufgespannte Fläche der Kommutierungszelle minimiert werden kann. Weiter ist damit eine besonders vorteilhafte Ableitung von Wärme möglich, wenn das Leistungsmodul direkt an das B-Lagerschild montiert ist.

Es sei verstanden, dass auch Gate-Treiber auf den Zahnbereichen angeordnet werden können, was ebenso insbesondere zu vorteilhaft kurzen Leitungen führt.

Das B-Lagerschild weist ein Gehäuse auf, welches ein Gehäuse der Platine darstellt. Damit kann ein Gehäuse zwei Funktionen, nämlich als Gehäuse des B-Lagerschilds und als Gehäuse der Platine, haben. Insbesondere kann das Gehäuse sowohl für den gesamten Elektromotor wie auch speziell für die Platine eine Umhüllung entsprechend der jeweils gewünschten Schutzklasse, beispielsweise hinsichtlich Flüssigkeitsschutz oder Staubschutz, darstellen.

Das B-Lagerschild kann aus zwei Einzelteilen zusammengesetzt sein, wobei eines der Einzelteile rotationssymmetrisch (beispielsweise als Drehteil) ausgebildet sein kann und das andere der Einzelteile als Strangpressteil ausgebildet sein kann.

Das Gehäuse weist eine Anzahl nach innen gerichteter Kühlrippen auf. Damit kann eine vorteilhafte Wärmeableitung von der Platine erreicht werden. Die Kühlrippen können hierzu vorteilhaft auf die Platine gerichtet sein. Durch die Ausrichtung nach innen sind diese von außen nicht sichtbar, so dass ein Motor ohne Platine nicht von einem solchen mit Platine unterschieden werden kann.

Die Platine kann vorteilhaft mittels einer Anzahl von Befestigungselementen, insbesondere Schrauben, selbsteinrastenden Klemmelementen und/oder Befestigungsbügeln aus Federstahl an dem Gehäuse befestigt sein. Dies erlaubt eine einfache und zuverlässige Befestigung der Platine, so dass insbesondere auch ein vorteilhafter Wärmetransport möglich ist.

Die Zahnbereiche der Platine können dabei mit einem jeweiligen Befestigungselement in dem Gehäuse wärmeleitend befestigt sein. Beispielsweise können hierzu Wärmeleitpasten oder sonstige Wärmeleitelemente verwendet werden. Damit kann Wärme, welche insbesondere bei auf den Zahnbereichen aufgebrachten Zwischenkreiskondensatoren oder Leistungsmodulen entsteht, vorteilhaft auf das Gehäuse und damit zur Umgebung hin abgeführt werden.

Das Gehäuse weist vorteilhaft eine Anzahl von Durchführungen für Spulendrähte auf, welche insbesondere elektrisch isolierend ausgebildet sein können. Jede Durchführung ist dabei vorteilhaft von einer Seite des Gehäuses, die Statorspulen des Elektromotors zugewandt ist, zu einer zugehörigen elektrischen Verbindungsstelle, beispielsweise in Form einer Lötstelle oder Schneid-/Klemmverbindung, auf der Platine geführt. Dies betrifft insbesondere die Einbausituation. Vorteilhaft sind die Durchführungen jeweils zur Verbindungsstelle hin konisch verengend ausgeführt. Die Statorspulen sind bevorzugt in Zahnspulentechnik ausgebildet, wobei ein jeweiliger Zahnbereich funktional einer jeweiligen Zahnspule zugeordnet sein kann.

Die Verbindungsstellen sind vorzugsweise von oben zugänglich. Sie können beispielsweise als Lötpunkt, Schneidklemme, Federkraftklemme oder Schraubklemme ausgeführt sein.

Mittels derartiger Durchführungen kann eine besonders einfache Herstellung erreicht werden, wobei die Spulendrähte ausgerichtet werden können und dann das B-Lagerschild derart auf den Rest des Elektromotors aufgesetzt wird, dass die Spulendrähte in die jeweiligen Öffnungen aufgenommen werden. Durch den konischen Verlauf wird ein unerwünschtes, unkontrolliertes Verbiegen der Spulendrähte verhindert. Die Spulendrähte verlassen dann vorteilhaft an genau der Stelle der Platine die Öffnungen, an welchen sie an der Platine befestigt bzw. mit dieser verlötet werden sollen.

Das Gehäuse kann mit einer die Platine umschließenden Vergussmasse befüllt sein. Damit kann ein vorteilhafter Schutz der Platine gegen Einflüsse wie beispielsweise Staub, Feuchtigkeit oder mechanische Beschädigungen erreicht werden. Außerdem kann bei entsprechender Wahl der Vergussmasse, beispielsweise als wärmeleitende Vergussmasse, eine vorteilhafte Wärmeabführung erreicht werden.

Die Erfindung betrifft des Weiteren einen Motorbausatz. Der Motorbausatz weist ein Elektromotorgehäuse auf. Er weist des Weiteren ein erstes B-Lagerschild auf, welches gemäß einem erfindungsgemäßen B-Lagerschild ausgeführt ist. Dabei kann auf alle beschriebenen Ausführungen und Varianten zurückgegriffen werden. Der Motorbausatz weist außerdem ein zweites B-Lagerschild auf, welches keine Platine bzw. keine Platine mit Umrichter aufweist.

Sowohl das erste B-Lagerschild als auch das zweite B-Lagerschild sind mit dem Elektromotorgehäuse zu einem Elektromotor derart zusammensetzbar, dass ein Elektromotor mit dem ersten B-Lagerschild zu einem Elektromotor mit dem zweiten B-Lagerschild von außen optisch ähnlich oder identisch ist.

Der erfindungsgemäße Motorbausatz ermöglicht es, einen Elektromotor sowohl als Motor ohne Leistungselektronik, wie auch als Elektronikmotor herzustellen, wobei beide unterschiedliche Ausführungen optisch voneinander nicht zu unterscheiden sind. Somit kann die Funktionalität eines Elektronikmotors geliefert werden, ohne bei technisch unversierten Betrachtern durch sichtbare, außenliegende Elektronik den Eindruck mangelnder Zuverlässigkeit zu erzeugen.

Die Erfindung betrifft des Weiteren einen Elektromotor, welcher ein Elektromotorgehäuse und ein damit verbundenes B-Lagerschild gemäß der Erfindung aufweist. Dabei kann auf alle beschriebenen Varianten und Ausführungen zurückgegriffen werden.

Mittels des erfindungsgemäßen Elektromotors können die weiter oben und an anderen Stellen in dieser Anmeldung beschriebenen Vorteile eines B-Lagerschilds für einen Elektromotor nutzbar gemacht werden. Insbesondere kann das Elektromotorgehäuse weitere Komponenten wie Spulen, insbesondere in Zahnspulentechnik, oder einen Rotor beinhalten, welche vorzugsweise so ausgebildet sind, dass durch Zusammensetzen des B-Lagerschilds und des Elektromotors ein funktionsfähiger Elektromotor entsteht. Es können jedoch hierzu auch noch weitere Komponenten wie beispielsweise ein A-Lagerschild oder eine Lüftereinheit montiert werden.

Der Elektromotor kann insbesondere eine Anzahl von Statorspulen, insbesondere in Zahnspulentechnik, mit jeweiligen Spulendrähten aufweisen, wobei die Spulendrähte durch jeweilige Durchführungen des B-Lagerschilds zu korrespondierenden elektrischen Verbindungsstellen auf der Platine geführt sind. Dies ermöglicht eine sehr platzsparende Anordnung der Spulendrähte und eine einfache Herstellung. Nachfolgend wird auf einige spezifische Vorteile der erfindungsgemäßen Lösung bzw. beschriebener Ausführungen detaillierter eingegangen.

Im Vergleich zum Stand der Technik können Steckverbindungen entfallen, da der hier vorgestellte Umrichter ein Ein-Platinen-Gerät ist. Dies kann insbesondere dadurch erreicht werden, dass anstelle von Steckverbindern in der Hauptplatine flexible Zwischenstücke als "Starr-Flex-Platinen" integriert sind. Diese müssen nicht gesteckt werden. Durch die abklappbaren Zahnbereiche bzw. Zahnplatinen, welche mit dem Zentralbereich bzw. der Zentralplatine über flexible Zwischenstücke verbunden sind, wird zusätzliche Platinenfläche geschaffen. Dadurch, dass der Umrichter komplett in einem geschlossenen Bauraum wie dem B-Lagerschild untergebracht werden kann, kann er aus nur einer Platine bestehen und muss nicht wie bei bisherigen Konzepten bei der Montage am Motor zusammengesteckt werden. Große Komponenten, beispielsweise Zwischenkreiskondensatoren, können auf einem jeweiligen Zahnbereich bzw. einer Zahnplatine angebracht werden, wodurch sich eine 2,5D-Konstruktion mit besonders guter Bauraumausnutzung ergibt.

Ein B-Lagerschild, welches wie beschrieben gleichzeitig als Gehäuse des Umrichters dient, ist von außen kaum von dem des vergleichbaren Serienmotors bzw. Motors zu unterscheiden. Anstelle der Elektronik könnte in ihm auch nur ein Verschaltungsring eingebracht werden und die elektrischen Maschinen des hochintegrierten Antriebs in einem äußerlich gleichen Gehäuse als Elektromotor ohne Elektronik verkauft werden. Dies kann insbesondere dadurch erreicht werden, dass das Gehäuse des Umrichters gleichzeitig als B-Lagerschild der elektrischen Maschine dient, das Gehäuse des Umrichters Kühlrippen enthält, welche nach außen nicht sichtbar sind, so dass sich eine ebene Oberfläche am gesamten Antrieb ergibt, und das Gehäuse des Umrichters die gleichen äußeren Abmessungen wie das Gehäuse der elektrischen Maschine aufweist. Ein weiterer Vorteil ergibt sich hinsichtlich der Automatisierung einer zu fertigenden Platine. Die gesamte Umrichterplatine kann aus mehreren starren Stücken bestehen, welche durch flexible Zwischenstücke verbunden sind, was auch als Starr-Flex-Platine bezeichnet wird. Dadurch kann sie in der planaren Ebene auf bestehenden Fertigungseinrichtungen automatisiert bestückt werden. Die Platine kann in zwei Arbeitsvorgängen automatisiert bestückt und gelötet werden. Zuerst können SMD-Bauteile auf ihrer Unterseite angebracht werden. Dann können bedrahtete Bauteile wie beispielsweise Kondensatoren und/oder Kompensationsstromwandler auf ihrer Oberseite angebracht werden.

Die Platine kann einfach in ein Umrichtergehäuse eingebaut werden. Erst nach dem kompletten Bestücken, wenn die Platine in das Gehäuse montiert wird, werden typischerweise die Zahnbereiche bzw. Zahnplatinen nach hinten abgeklappt. Dazu bedarf es keiner besonderen Vorrichtung, sondern dies passiert quasi automatisch, indem die Platine in das Gehäuse eingelegt wird.

Bei einer alternativen Realisierungsmöglichkeit ohne Starr-Flex-Zwischenstücke befinden sich die Zahnplatinen bereits in der richtigen Position und müssen nicht abgeknickt werden. Wenn die Platine in dem Gehäuse liegt, können Befestigungselemente zwischen Zentralbereich und Umrichtergehäuse angebracht werden. Hierfür können beispielsweise Schrauben, selbsteinrastende Klemmelemente oder andere Befestigungsmittel verwendet werden. Mit selbsteinrastenden Klemmelementen kann beispielsweise ein Arbeitsschritt "Schrauben" entfallen.

Danach können die Zahnplatinen mit aufsteckbaren Befestigungselementen fixiert werden. Durch diese Anpressung wird ein thermisch gut leitfähiger Kontakt zwischen Gehäuse und Leistungsmodul hergestellt.

Das Maschinengehäuse kann mit dem Umrichtergehäuse einfach verbunden werden. Die Maschine, d.h. insbesondere der Elektromotor, kann auf den bestehenden Fertigungseinrichtungen vormontiert werden. Dabei können insbesondere ein A-Lagerschild und eine Welle mit Gehäuse und Stator montiert werden. Typischerweise sind je Zahnspule zwei Drähte vorgesehen, welche senkrecht nach hinten stehen.

Durch die im Umrichtergehäuse eingebrachten konischen Durchführungen für Spulendrähte findet jeder Zahnspulendraht beim Aufpressen des B-Lagerschilds auf die Welle seinen Weg zum zugehörigen Lötpunkt. Die Lötpunkte für die Spulendrähte sind vorzugsweise von oben zugänglich. Die Lötverbindung kann somit automatisiert hergestellt werden. Danach kann bei Bedarf das Umrichtergehäuse mit Vergussmasse befüllt und eine Lüftereinheit montiert werden. Jetzt kann der gesamte Antrieb fertig montiert sein.

Bei bisherigen Ausführungen waren typischerweise Inlay-Kühlkörper oder Adapterplatten für die thermische Anbindung der Leistungshalbleiter nötig. Diese können bei der erfindungsgemäßen Lösung entfallen, da die Leistungshalbleiter jetzt über das B-Lagerschild thermisch angebunden werden können. Ein Ringkondensator kann entfallen, da Kondensatoren auf den Zahnplatinen bzw. Zahnbereichen untergebracht werden können. Die verwendeten Kondensatoren sind typischerweise Standardkomponenten, welche einfacher zu beschaffen sind. Separate Zahnplatinen können ebenfalls entfallen, da diese hier als abknickbares Stück der Zentralplatine bzw. des Zentralbereichs realisiert werden können.

Durch die abklappbaren Zahnplatinen und die auf ihnen angebrachten Zwischenkreiskondensatoren kann die effektiv nutzbare Platinenfläche deutlich erhöht werden. Dadurch ist es möglich, alle Komponenten des Umrichters auf einer Platine unterzubringen und auf ein Stapeln der Platinen zu verzichten. Der Bauraum im B-Lagerschild wird durch die beschriebene 2,5D-Platinen-Konstruktion optimal ausgenutzt.

Typischerweise wird bei der erfindungsgemäßen Lösung lediglich das Umrichtergehäuse, welches gleichzeitig das B-Lagerschild ist, als 3D-CNC-Frästeil hergestellt. Dieses kann als Gussteil ausgeführt und spanend nachbearbeitet werden. Durch die Ausführung des Umrichtergehäuses als Gussteil entstehen nicht mehr Späne und es wird nicht mehr Aufwand benötigt, als dies bei einem vergleichbaren B-Lagerschild ohne integrierten Umrichter der Fall ist. Somit werden Material, Zeit und Kosten gespart. Inlay-Kühlkörper, Adapterplatten oder aus dem Vollen gefräste Gehäuseteile können entfallen.

Ein Zwischenkreiskondensator kann auf der einen Seite des Zahnbereichs, welcher als Platinenstück angesehen werden kann, montiert sein, wobei das Leistungsmodul auf der anderen Seite montiert werden kann. Dadurch werden der räumliche Abstand und somit auch die aufgespannte Fläche, welche für die Induktivität entscheidend ist, minimal. Der verwendete Kondensator und das Leistungsmodul können auf bestehenden Fertigungseinrichtungen bestückt und gelötet werden.

Die gesamte Elektronik kann sich in einem Bauraum befinden, nämlich dem Umrichtergehäuse, welches gleichzeitig als B-Lagerschild dient. Dieser Bauraum kann einfach und kostengünstig mit Vergussmasse gefüllt werden.

Unter Kostenaspekten kann es manchmal sinnvoll sein, auf Starr-Flex-Platinen zu verzichten. Es gibt grundsätzlich zwei beispielhafte Möglichkeiten, dies zu realisieren.

Zum einen kann eine Stiftleiste auf die dann einzeln auszuführenden Zahnbereiche bzw. Zahnplatinen aufgelötet werden. In dem Zentralbereich bzw. auf der Zentralplatine wird ein der Stiftleiste entsprechendes Lochbild vorgesehen. Die Stiftleiste kann in das Lochbild gesteckt und verlötet werden. Somit ergibt sich ebenfalls eine rechtwinklige Verbindung zwischen beiden Platinen. Es ist auch die umgekehrte Ausführung möglich, in welcher die Stiftleisten auf dem Zentralbereich und entsprechende Lochbilder auf den Zahnbereichen möglich sind.

Des Weiteren kann auch eine Kante des Zahnbereichs, welche in die Zentralplatine gesteckt ist, mit Zähnen ausgeführt sein. In der Zentralplatine bzw. dem Zentralbereich sind vorteilhaft entsprechende rechtwinklige Aussparungen vorgesehen. Beide Platinen werden rechtwinklig ineinandergesteckt und verlötet. Somit ergibt sich eine rechtwinklige Verbindung zwischen beiden Platinen. Es ist auch die umgekehrte Ausführung möglich, nach welcher Zähne an der Zentralplatine und rechtwinklige Aussparungen auf der Zahnplatine angeordnet sind.

Damit können Vorteile wie beispielsweise geringere Materialkosten für die Platinen erreicht werden. Es werden n Zahnplatinen pro Zentralplatine gefertigt, wodurch sich bei ihnen höhere Stückzahlen ergeben, was zu Kosteneinsparungen pro Platine führen kann. Außerdem wird die Fläche der Zentralplatine kleiner.

Für den Elektromotor kann eine Ausführung ohne Sternpunkt gewählt werden, wobei dann die Leistungsmodule als Vollbrückenmodule beispielsweise mit vier Insulated-Gate-BipolarTransistoren (IGBTs) und vier Dioden ausgeführt sein können. Es kann auch eine Ausführung mit Sternpunkt gewählt werden, dann sind die Leistungsmodule als Halbbrückenmodule beispielsweise mit zwei IGBTs und zwei Dioden ausgeführt. Die Anzahl der Zahnspulen kann variieren, wobei aber nur eine Kombination aus Spulenzahl und Rotorpolpaarzahl typischerweise sinnvoll ist.

Gate-Treiber für die Leistungshalbleiter können auf dem Zahnbereich bzw. der Zahnplatine platziert werden, dann sitzen sie direkt über dem schaltenden Leistungshalbleiter.

Ein oder mehrere Zwischenkreiskondensatoren können auf der Oberseite der Zahnplatine platziert werden. Dann sitzen diese ebenfalls direkt über dem schaltenden Leistungshalbleiter. Der damit mögliche kleine Kommutierungskreis reduziert EMV-Störungen und Spannungsspitzen am schaltenden Halbleiter. Der im B-Lagerschild zur Verfügung stehende Bauraum wird somit besser ausgenutzt als wenn die Kondensatoren auf der Zentralplatine platziert werden.

Das verwendete Leistungsmodul kann beispielsweise in SMD-Technik gelötet werden. Ein verwendeter Kondensator kann in THT-Technik ausgeführt sein. Auch die umgekehrte Ausführung ist möglich. Damit kann eine größtenteils automatisierte Bestückung und Lötung erreicht werden.

Mittig auf der Unterseite des Zentralbereichs kann beispielsweise ein magnetoresistiver Sensor angebracht werden. Dieser bildet dann mit dem am Wellenende angebrachten Magnet eine Einrichtung zur Erfassung der Rotorlage. Auf einen separat ausgeführten Rotorlagegeber kann dann verzichtet werden.

Wärmeerzeugende Bauteile wie beispielsweise Mikrocontroller oder FPGAs (Field Programmable Gate Arrays) auf der Zentralplatine können in SMD-Technik ausgeführt sein und auf der Unterseite der Platine platziert werden. Dann wirkt das B-Lagerschild auch für diese Bauteile als Kühlkörper. Als Befestigungselemente können insbesondere Befestigungsbügel verwendet werden. Diese können vorteilhaft aus Federstahl bestehen. Sie ermöglichen eine Montage der Platine ohne Werkzeug in ihrem Gehäuse, welches gleichzeitig das B-Lagerschild darstellt.

Nachfolgend erfolgt nochmals eine stichpunktartige Aufzählung möglicher Merkmale und/oder Vorteile der erfindungsgemäßen Lösung und ihrer beschriebenen Ausgestaltungen:
- Erhöhte Zuverlässigkeit, besonders in Applikationen, bei welchen mit starken Erschütterungen zu rechnen ist.
- Weniger Aufwand bei der Montage, da keine manuellen Steckvorgänge ausgeführt werden müssen.
- Mehr nutzbare Platinenfläche durch 2,5D-Konstruktion.
- Bessere Ausnutzung und dadurch mehr verfügbarer Bauraum im B-Lagerschild durch 2,5D-Konstruktion.
- Die Platine kann größtenteils automatisiert gefertigt werden, da Steckverbindungen entfallen.
- Eine Trennung von Motoren- und Elektronikfertigung ist aus organisatorischen und technischen Gründen vorteilhaft, diese Trennung kann bestehen bleiben.
- Durch die Reduzierung der Variantenvielfalt können höhere Stückzahlen erreicht werden.
- Eine glatte Oberfläche kann sich nicht, wie es bei außenliegenden Kühlrippen oft geschieht, im Betrieb mit Schmutz zusetzen.
- Innenliegende Kühlrippen stellen auch bei hohen Temperaturen kein Verletzungsrisiko dar.
- Sichtbare Elektronik, welche bei Nicht-Fachleuten oft Zweifel an der Zuverlässigkeit auslöst, wird vermieden.
- Die Montage kann größtenteils automatisiert erfolgen.
- Reduzierung von Fehlermöglichkeiten durch automatisierte Prozesse.
- Leichtere Produzierbarkeit durch den Einsatz von Standardkomponenten.
- Die Montage der elektrischen Maschine bleibt vom Ablauf in den verwendeten Vorrichtungen unverändert.
- Es werden weniger Komponenten benötigt, was weniger Aufwand und weniger Kosten bedeutet.
- Höhere Zuverlässigkeit, da fehleranfällige Komponenten entfallen.
- Standardkomponenten sind in gleichbleibend hoher Qualität von mehreren Anbietern verfügbar, so können Engpässe ausgeschlossen werden.
- Durch eine größere nutzbare Fläche auf der Platine kann auf einen Stapel von mehreren Platinen verzichtet werden. Dies spart Kosten und erhöht die Zuverlässigkeit, weil die bei Vibrationen und Erschütterungen fehleranfälligen Steckverbinder zwischen den Platinen entfallen.
- Material- und Fertigungszeiteinsparungen bei der Serienfertigung, da bei Gussteilen deutlich weniger Späne anfallen, wenn diese nur nachbearbeitet werden, als wenn gesamte Werkstücke aus dem Vollen gefräst werden müssen.
- Kosteneinsparung bei der Qualitätssicherung in der Serienfertigung, da die hergestellten Flächen mit einfachen mechanischen Messmitteln und Vorrichtungen kontrolliert werden können.
- Es sind nicht mehr und auch keine komplizierteren mechanischen Komponenten notwendig als bei heutigen Motorengehäusen, dadurch ist mit einer ähnlichen Kostenstruktur der mechanischen Fertigung zu rechnen.
- Weniger EMV-Störungen und damit sind weniger kostenintensive Entstörmaßnahmen notwendig, da die Kommutierungszelle sehr klein ist.
- Reduzierte Spannungsspitzen an den schaltenden Leistungshalbleitern bei den Schaltvorgängen, dadurch werden die Leistungshalbleiter nicht so stark belastet, wodurch sich deren Zuverlässigkeit erhöht.
- Stabilere Spannung an den schaltenden Leistungshalbleitern, wodurch ihre Regelung vereinfacht und ein steilerer Anstieg des Spulenstroms erreicht wird. Dies führt zu einem Zuwachs an Antriebsperformance wie Dynamik, Steifigkeit und Momentenrippel.
- Hohe Schutzklassen können ohne Dichtelemente erreicht werden.
- Durch Verguss sind die elektronischen Bauteile besser vor Erschütterungen und Vibrationen geschützt.
- Insbesondere ist die Erfindung vorteilhaft für mittlere Motorbaugrößen von etwa 5,5 kW bis 11 kW, jedoch auch für alle anderen Motorbaugrößen anwendbar.

Die Erfindung wird nachfolgend unter Bezugnahme auf die Zeichnungen detailliert beschrieben. Hierbei zeigen:
- Fig. 1:: Teile eines Elektronikmotors in einer Explosionsansicht,
- Fig. 2:: die in Fig. 1 dargestellten Teile teilweise zusammengebaut,
- Fig. 3:: die in Fig. 2 dargestellten Teile teilweise zusammengebaut,
- Fig. 4:: die in Fig. 3 dargestellten Teile zusammengebaut,
- Fig. 5:: einen vollständigen Elektromotor von außen,
- Fig. 6:: eine Explosionsansicht von Teilen eines Elektromotors aus einer anderen Perspektive,
- Fig. 7:: den Elektromotor aus einer anderen Perspektive,
- Fig. 8:: Teile des Elektromotors,
- Fig. 9a:: eine Detailansicht eines B-Lagerschilds,
- Fig. 9b und 9c:: eine Rast- und Dichtlippe in unterschiedlichen Ansichten,
- Fig. 10a:: eine Platine mit planen Zahnbereichen,
- Fig. 10b:: eine Platine mit abgeknickten Zahnbereichen.

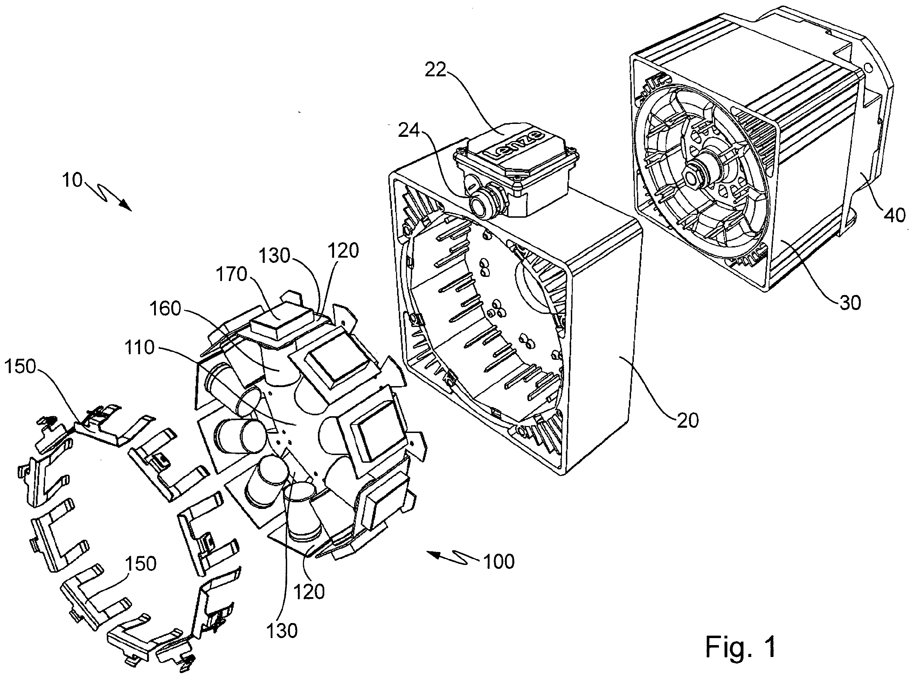

Fig. 1 zeigt Teile eines Elektromotors 10 in einer Explosionsansicht.

Der Elektromotor 10 weist ein B-Lagerschild 20 auf. Auf diesem sind ein Klemmenkasten 22 und eine daran angeordnete Durchführung 24 angeordnet.

Der Elektromotor 10 weist ferner ein Elektromotorgehäuse 30 auf. In diesem sind nicht näher bezeichnete Komponenten wie Spulen in Zahnspulentechnik angeordnet.

In der Darstellung von Fig. 1 hinter dem Elektromotorgehäuse 30 ist ein A-Lagerschild 40 angeordnet.

Vorne in Fig.1 ist eine Platine 100 dargestellt, welche dazu ausgebildet ist, in dem B-Lagerschild 20 aufgenommen zu werden.

Die Platine 100 weist einen Zentralbereich 110 auf. Dieser ist insbesondere flach und scheibenförmig ausgebildet. In dem Zentralbereich 110 ist ein Umrichter ausgebildet, welcher nicht näher dargestellt oder beschrieben ist. Insoweit sei auf die einschlägige Fachliteratur verwiesen.

Radial umliegend um den Zentralbereich 110 ist eine Anzahl von insgesamt zehn Zahnbereichen 120 ausgebildet, welche im Vergleich zum Zentralbereich 110 in einem jeweiligen Winkel von 90° stehen. Es sei verstanden, dass sowohl in dieser Darstellung wie auch in weiteren Darstellungen nicht alle Zahnbereiche 120 oder ähnliche bzw. damit verbundene Komponenten mit Bezugszeichen versehen sind, sondern jeweils nur exemplarische Elemente, um die Darstellung nicht unnötig zu verkomplizieren.

Zwischen einem jeweiligen Zahnbereich 120 und dem Zentralbereich 110 ist eine jeweilige Biegestelle 130 vorgesehen. An der Biegestelle 130 ist der jeweilige Zahnbereich 120 relativ zum Zentralbereich 110 verbiegbar, und zwar insbesondere um einen Winkel von 90°. Somit kann der jeweilige Zahnbereich 120 im Vergleich zur in Fig. 1 dargestellten Stellung um 90° verbogen werden, so dass dann der jeweilige Zahnbereich 120 plan mit dem Zentralbereich 110 liegen würde. Eine solche Stellung erlaubt insbesondere eine vorteilhafte automatisierte Bestückung.

Auf jedem Zahnbereich 120 ist innenseitig ein Kondensator 160 angeordnet. Außenliegend dazu ist ein jeweiliges Leistungsmodul 170 angeordnet. Dies erlaubt einen sehr geringen Abstand zwischen Kondensator 160 und Leistungsmodul 170, so dass eine dazwischen auftretende Induktivität minimiert wird.

In Fig. 1 sind des Weiteren noch insgesamt zehn Befestigungselemente 150 gezeigt, welche klammerförmig ausgebildet sind. Die Befestigungselemente 150 können, wie dies in den nachfolgenden Figuren dargestellt und entsprechend beschrieben ist, auf die Zahnbereiche 120 gesteckt werden, um diese im eingebauten Zustand zu fixieren. Hierauf wird weiter unten näher eingegangen werden.

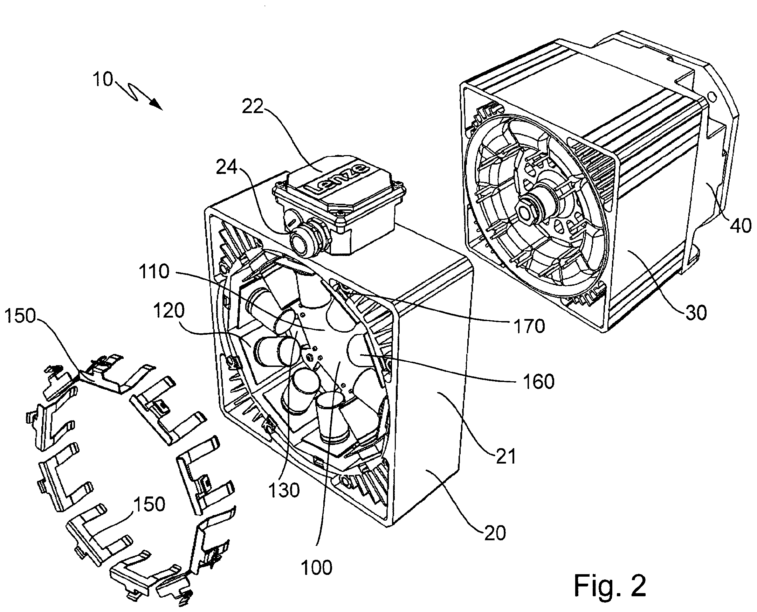

Fig. 2 zeigt den Elektromotor 10 in einem weiter zusammengebauten Zustand. Dabei wurde die Platine 100 in das B-Lagerschild 20 aufgenommen.

Das B-Lagerschild 20 weist ein Gehäuse 21 auf, welches nunmehr auch das Gehäuse der Platine 100 ist. Anders ausgedrückt dient das Gehäuse 21 des B-Lagerschilds 20 gleichzeitig auch als Gehäuse des Umrichters. Eine typischerweise ohnehin für den Elektromotor 10 vorgesehene Schutzklasse des Gehäuses 21, insbesondere hinsichtlich Feuchtigkeit und/oder Staub, wirkt somit automatisch auch für den auf der Platine 100 angeordneten Umrichter.

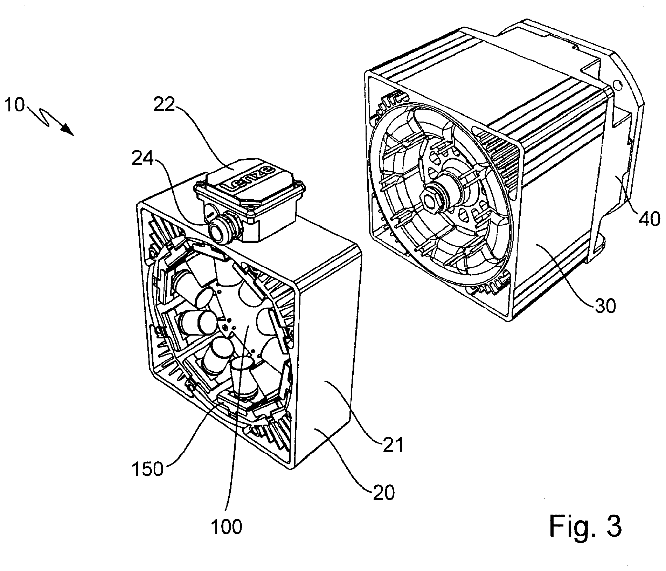

Fig. 3 zeigt den Elektromotor 10 in einem noch weiter zusammengebauten Zustand. Dabei wurde das Elektromotorgehäuse 30 an dem B-Lagerschild 20 befestigt.

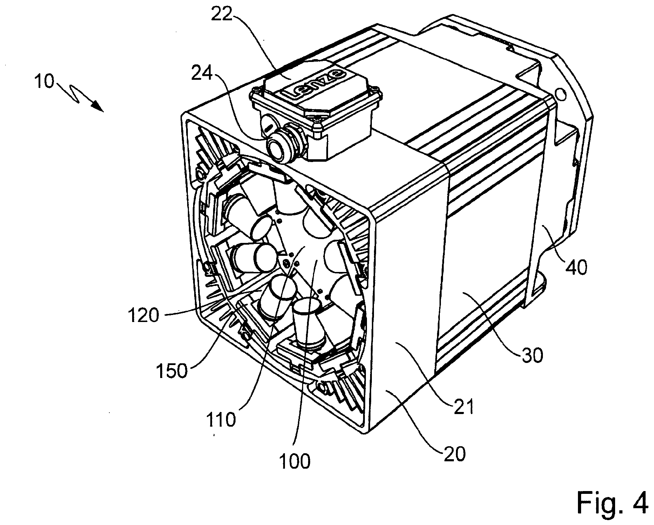

Fig. 4 zeigt den Elektromotor 10 in einem noch weiter zusammengebauten Zustand. Dabei wurden die Befestigungselemente 150 auf die jeweiligen Zahnbereiche 120 gesteckt, so dass jedem Zahnbereich 120 jeweils ein Befestigungselement 150 zugeordnet ist. Die Befestigungselemente 150 sorgen dabei dafür, dass die Zahnbereiche 120 in einer definierten Position und Orientierung relativ zum Gehäuse 21 des B-Lagerschilds 20 gehalten werden. Dies sorgt insbesondere auch für einen besonders guten thermischen Kontakt zwischen dem jeweiligen Zahnbereich 120 und dem B-Lagerschild 20. Damit kann Wärme, insbesondere aus dem jeweiligen Leistungsmodul 170, vorteilhaft direkt an das B-Lagerschild 20 abgegeben und von dort aus nach außen abgeführt werden.

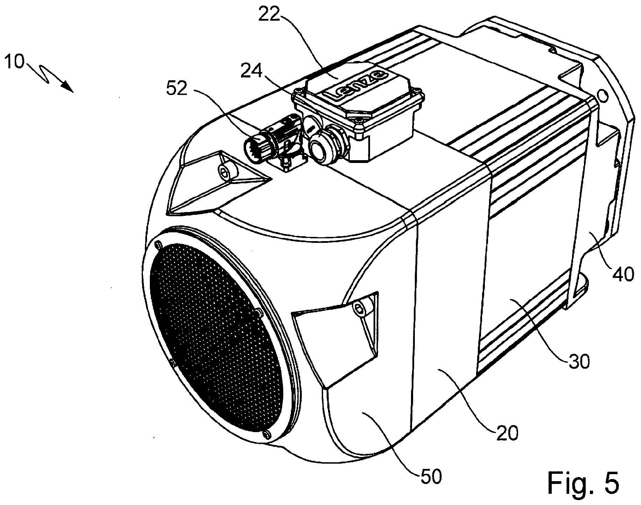

Fig. 5 zeigt den Elektromotor 10 in einem zusammengebauten Zustand. Zusätzlich zu den bereits gezeigten und beschriebenen Elementen weist der Elektromotor 10 ferner eine Lüftereinheit 50 auf. In der Lüftereinheit 50 ist ein Lüfter angeordnet, welcher zur Kühlung des Motors 10 dient. Des Weiteren ist auf der Lüftereinheit 50 ein Anschluss 52 angeordnet, an welchem Kommunikationsbauelemente wie beispielsweise ein Anschluss für einen CAN-Bus angeordnet sein können. Dies erlaubt eine vorteilhafte Einbindung des Elektromotors 10 in eine Steuerung, beispielsweise eines Fahrzeugs oder eines Flugzeugs.

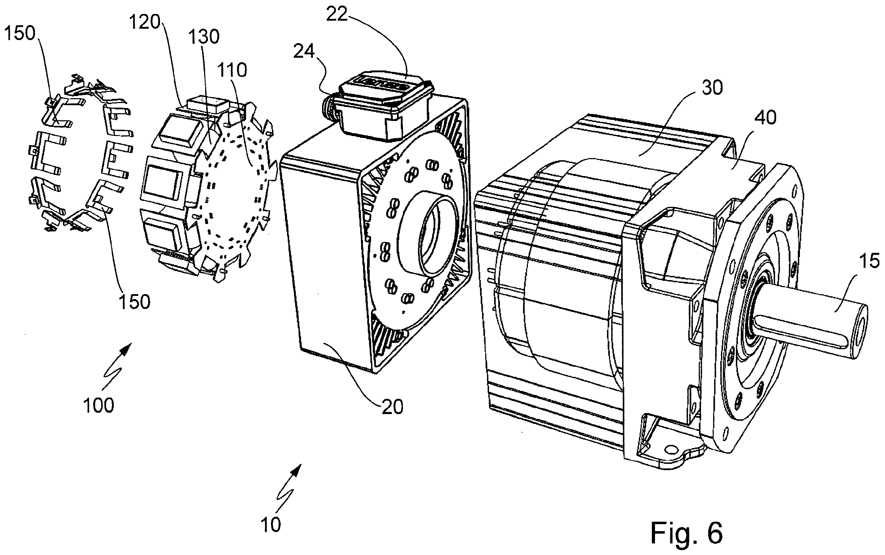

Fig. 6 zeigt den Elektromotor 10 in einer weiteren Explosionsansicht, und zwar aus einer anderen Perspektive als in Fig. 1. Bezüglich der einzelnen Komponenten sei auf die obige Beschreibung von Fig. 1 und den anderen Figuren verwiesen. Zusätzlich ist in Fig. 6 eine Welle 15 zu sehen, welche aus dem A-Lagerschild 40 herausschaut. Diese Welle 15 dreht sich beim Betrieb des Elektromotors 10 und kann dazu verwendet werden, Komponenten wie beispielsweise eine Klimaanlage eines Flugzeugs anzutreiben.

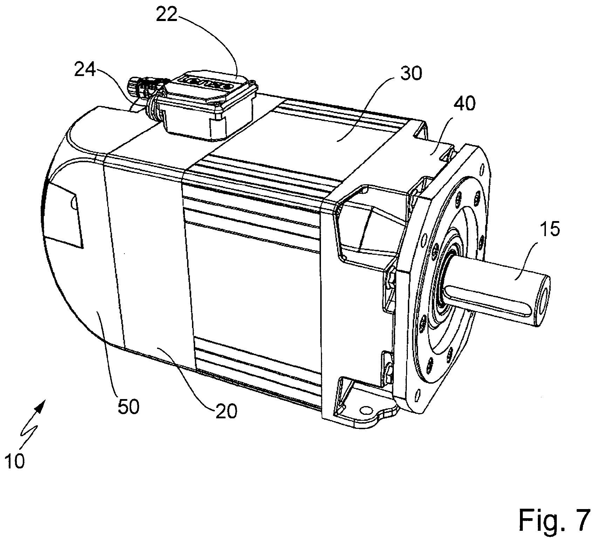

Fig. 7 zeigt den Elektromotor 10 in einem komplett zusammengebauten Zustand aus einer ähnliche Perspektive wie Fig. 6. Bezüglich der einzelnen dargestellten Komponenten sei auf die obige Beschreibung der anderen Figuren verwiesen.

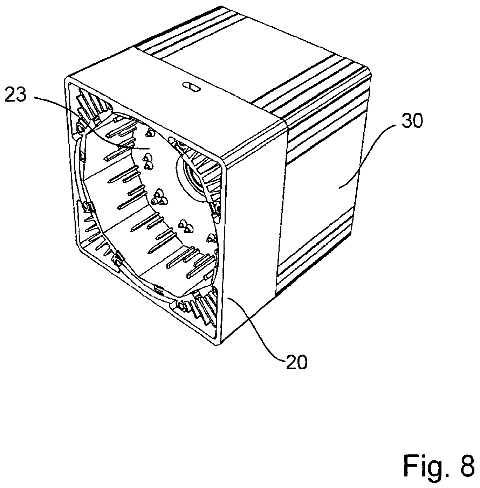

Fig. 8 zeigt das B-Lagerschild 20 zusammen mit dem Elektromotorgehäuse 30. Dabei ist insbesondere das B-Lagerschild 20 ohne Platine 100 zu erkennen, wobei erwähnt sei, dass in dem B-Lagerschild 20 eine Kavität 23 zur Aufnahme der Platine 100 ausgebildet ist. Ansonsten sei auf die obige Beschreibung verwiesen.

Bezüglich des Elektromotors 10 kann auch davon gesprochen werden, dass das B-Lagerschild 20 einen der Elektronik zugeordneten Gehäuseabschnitt darstellt und das Elektromotorgehäuse 30 einen dem Aktivteil zugeordneten Gehäuseabschnitt darstellt.

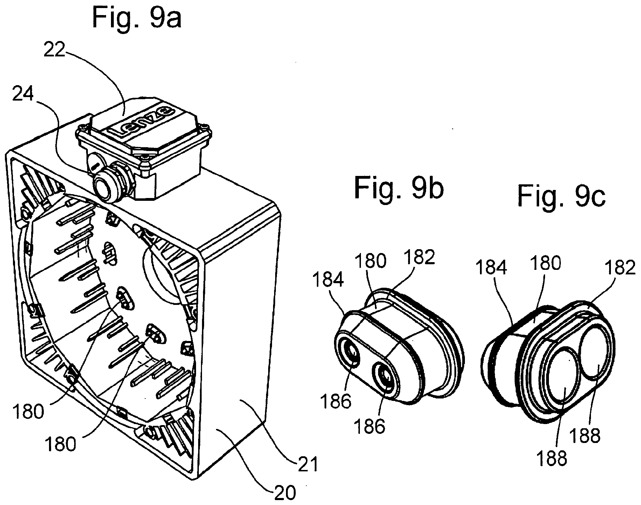

Fig. 9a zeigt das B-Lagerschild 20 von Fig. 8 in größerer Detailliertheit. Dabei ist insbesondere zu erkennen, dass in dem B-Lagerschild 20 bzw. in dessen Gehäuse 21 eine Anzahl von insgesamt zehn nachgiebigen Drahtführungshülsen 180 angeordnet ist. Jeweils eine Drahtführungshülse 180 ist dabei einem Zahnbereich 120 im eingebauten Zustand zugeordnet.

Die Drahtführungshülsen 180 sind jeweils zentrierend, einklinkbar, elektrisch isolierend und dichtend. Sie können hierfür insbesondere aus Silikon- oder Polymermaterial ausgebildet sein.

Die Fig. 9b und 9c zeigen eine Drahtführungshülse 180 in größerer Detailliertheit. Dabei ist zu erkennen, dass an jeder Drahtführungshülse 180 ein umlaufender Anschlag 182 angeordnet ist, welcher in der Darstellung von Fig. 9a nicht zu sehen ist, da er sich hinten befindet. Des Weiteren weist eine Drahtführungshülse 180 eine Rast- und Dichtlippe 184 auf, welche sich in Fig. 9a vorne befindet.

Durch die Drahtführungshülse 180 gehen jeweils zwei Bohrungen durch, welche von hinten als Eingang 188 und von vorne als Ausgang 186 zu sehen sind. Dabei ist auch zu erkennen, dass der jeweilige Eingang 188 einen größeren Durchmesser als der Ausgang 186 aufweist. Die jeweiligen Bohrungen sind somit trichterförmig ausgebildet.

Wenn ein Spulendraht in den jeweiligen Eingang 188 eintritt, insbesondere wenn während einer Montage das B-Lagerschild 20 auf das Elektromotorgehäuse 30 aufgebracht wird, führt die bereits erwähnte Trichterform insbesondere dazu, dass die Spulendrähte an einer genau definierten Position im B-Lagerschild 20 herausragen und somit sehr einfach mit der Platine 100 elektrisch verbunden werden können.

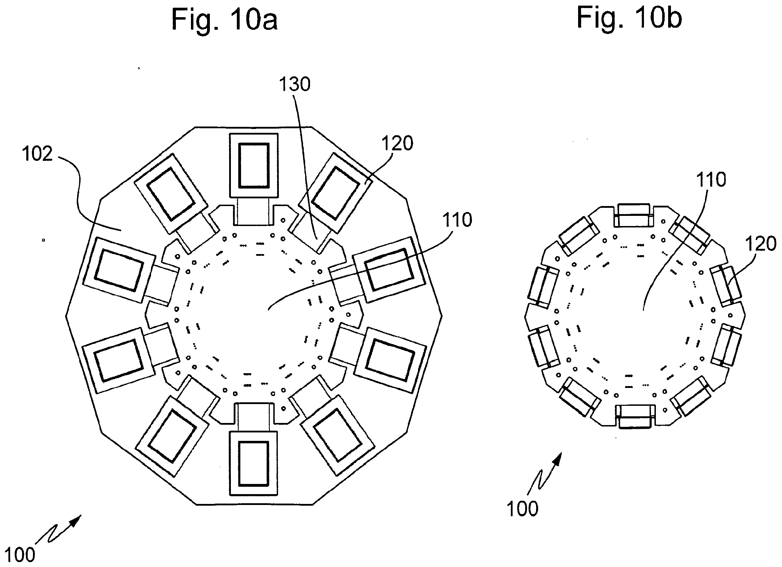

Fig. 10a zeigt eine Draufsicht auf die Platine 100 in einem Zustand, bevor die jeweiligen Zahnbereiche 120 aufgeklappt wurden. Anders ausgedrückt sind die Zahnbereiche 120 plan mit dem Zentralbereich 110 ausgerichtet.

Zu sehen ist in Fig. 10a insbesondere eine Ausgangsplatine 102, welche mit Schnitten und Einfräsungen bzw. mit Segmenten versehen ist, so dass die Zahnbereiche 102 sowie der Zentralbereich 110 abgetrennt werden können. In dem in Fig. 10a dargestellten Zustand kann insbesondere besonders vorteilhaft auf normale automatisierte Bestückungsverfahren zurückgegriffen werden, was im Vergleich zu einer manuellen Bestückung die Kosten deutlich senkt.

Die Biegestellen 130 können insbesondere als flexible Bereiche ausgebildet sein. Diese können beispielsweise monolithisch aus der Grundplatine herausgearbeitet sein, beispielsweise durch Fräsen. Ebenso ist es möglich, die Biegestellen 130 als angefügte flexible Bereiche vor dem Aufbrechen der Kontur bzw. der Segmente anzubringen.

Wie gezeigt ist die Ausgangsplatine 102 sternförmig ausgebildet. Insbesondere ist sie vorliegend als Zehn-Eck ausgebildet.

Fig. 10b zeigt die Platine 100 von Fig. 10a in einem Zustand, in welchem die relevanten Bestandteile aus der Ausgangsplatine 102 herausgebrochen wurden und ferner die Zahnbereiche 120 um 90° verbogen wurden, so wie dies beispielsweise in Fig. 1 und den weiteren Figuren dargestellt ist. Bezüglich der weiteren Details sei auf die Beschreibung zu den anderen Figuren verwiesen.

## Patentansprüche

1. B-Lagerschild (20) für einen Elektromotor (10),
- wobei in das B-Lagerschild (20) eine Platine (100) integriert ist,
- wobei auf der Platine (100) ein Umrichter ausgebildet ist,
- wobei das B-Lagerschild (20) ein Gehäuse (21) aufweist, welches ein Gehäuse der Platine (100) darstellt, und
- wobei die Platine (100) in einen Zentralbereich (110) und eine Anzahl den Zentralbereich (110) umgebende Zahnbereiche (120) unterteilt ist, wobei Ebenen der Zahnbereiche (120) gegenüber einer Ebene des Zentralbereichs (110) in einer Einbaustellung abgewinkelt sind,
**dadurch gekennzeichnet, dass**
- die Platine (100) Biegestellen (130) zwischen dem Zentralbereich (110) und den jeweiligen Zahnbereichen (120) aufweist, wobei ein jeweiliger Zahnbereich (120) mittels der zugehörigen Biegestelle (130) zwischen einem gestreckten Zustand, in welchem die Ebene des jeweiligen Zahnbereichs (120) parallel zur Ebene des Zentralbereichs (110) ist, und einem abgewinkelten Zustand, in welchem die Ebene des jeweiligen Zahnbereichs (120) quer zur Ebene des Zentralbereichs (110) steht, bewegbar ist, und
- das Gehäuse (21) eine Anzahl innenliegender Kühlrippen aufweist.

2. B-Lagerschild (20) nach Anspruch 1, **dadurch gekennzeichnet, dass**
- auf einem jeweiligen Zahnbereich (120) ein Zwischenkreiskondensator (160) und/oder ein Leistungsmodul (170) angeordnet ist/sind,
- wobei vorzugsweise der Zwischenkreiskondensator (160) und das Leistungsmodul (170) auf gegenüberliegenden Seiten des jeweiligen Zahnbereichs (120) an gleicher Position angeordnet sind.

3. B-Lagerschild (20) nach einem der vorhergehenden Ansprüche, **dadurch gekennzeichnet, dass**
- die Platine (100) mittels einer Anzahl von Befestigungselementen, insbesondere Schrauben, selbsteinrastenden Klemmelementen und/oder Befestigungsbügeln aus Federstahl, an dem Gehäuse (21) befestigt ist.

4. B-Lagerschild (20) nach einem der vorhergehenden Ansprüche, **dadurch gekennzeichnet, dass**
- die Zahnbereiche (120) der Platine (100) mit einem jeweiligen Befestigungselement (150) an dem Gehäuse (21) wärmeleitend befestigt sind.

5. B-Lagerschild (20) nach einem der vorhergehenden Ansprüche, **dadurch gekennzeichnet, dass**
- das Gehäuse (21) eine Anzahl von, insbesondere elektrisch isolierenden, Durchführungen für Spulendrähte aufweist, wobei jede Durchführung von einer Seite des Gehäuses, die Statorspulen des Elektromotors (10) zugewandt ist, zu einer zugehörigen Verbindungsstelle auf der Platine (100) führt,
- wobei die Durchführungen vorzugsweise zur Verbindungsstelle hin konisch verengend ausgeführt sind.

6. B-Lagerschild (20) nach einem der vorhergehenden Ansprüche, **dadurch gekennzeichnet, dass**
- das Gehäuse (21) mit einer die Platine (100) umschließenden Vergussmasse befüllt ist.

7. Motorbausatz, aufweisend
- ein Elektromotorgehäuse (30),
- ein erstes B-Lagerschild (20) nach einem der vorhergehenden Ansprüche, sowie
- ein zweites B-Lagerschild (20), welches keine Platine (100) mit Umrichter aufweist,
- wobei sowohl das erste B-Lagerschild (20) als auch das zweite B-Lagerschild (20) mit dem Elektromotorgehäuse (30) zu einem Elektromotor (10) derart zusammensetzbar sind, dass ein Elektromotor (10) mit dem ersten B-Lagerschild (20) zu einem Elektromotor (10) mit dem zweiten B-Lagerschild (20) von außen optisch identisch ist.

8. Elektromotor (10), aufweisend
- ein Elektromotorgehäuse (30), und
- ein damit verbundenes B-Lagerschild (20) nach einem der Ansprüche 1 bis 6,
- wobei der Elektromotor (10) insbesondere eine Anzahl von Statorspulen mit jeweiligen Spulendrähten aufweist, wobei die Spulendrähte durch jeweilige Durchführungen des B-Lagerschilds (20) zu korrespondierenden Verbindungsstellen auf der Platine (100) geführt sind.

## Claims

1. Non-drive end shield (20) for an electric motor (10),
- wherein a circuit board (100) is integrated into the non-drive end shield (20),
- wherein a converter is formed on the circuit board (100),
- wherein the non-drive end shield (20) has a housing (21) which constitutes a housing of the circuit board (100), and
- wherein the circuit board (100) is divided into a central region (110) and a number of toothed regions (120) surrounding the central region (110), wherein planes of the toothed regions (120) are bent with respect to a plane of the central region (110) in a mounting position,
**characterized in that**
- the circuit board (100) has bending points (130) between the central region (110) and the respective toothed regions (120), wherein a respective toothed region (120) can be moved, by means of the associated bending point (130), between an extended state in which the plane of the respective toothed region (120) is parallel to the plane of the central region (110), and a bent state in which the plane of the respective toothed region (120) is positioned transversely with respect to the plane of the central region (110), and
- the housing (21) has a number of inwardly directed cooling fins.

2. Non-drive end shield (20) according to claim 1, **characterized in that**
- an intermediate circuit capacitor (160) and/or a power module (170) are/is arranged on a respective toothed region (120),
- wherein preferably the intermediate circuit capacitor (160) and the power module (170) are arranged at the same position on opposite sides of the respective toothed region (120).

3. Non-drive end shield (20) according to any of the preceding claims, **characterized in that**
- the circuit board (100) is attached to the housing (21) by means of a number of attachment elements, in particular screws, self-locking clamping elements and/or attachment brackets made of spring steel.

4. Non-drive end shield (20) according to any of the preceding claims, **characterized in that**
- the toothed regions (120) of the circuit board (100) are attached in a heat-conducting fashion to the housing (21) by means of a respective attachment element (150).

5. Non-drive end shield (20) according to any of the preceding claims, **characterized in that**
- the housing (21) has a number of, in particular electrically insulating, feedthroughs for coil wires, wherein each feedthrough leads from one side of the housing, which faces the stator coils of the electric motor (10), to an associated connecting point on the circuit board (100),
- wherein the feedthroughs are preferably embodied in such a way that they taper conically toward the connecting point.

6. Non-drive end shield (20) according to any of the preceding claims, **characterized in that**
- the housing (21) is filled with a sealing compound which encloses the circuit board (100).

7. Motor kit, comprising
- an electric motor housing (30),
- a first non-drive end shield (20) according to any of the preceding claims, and
- a second non-drive end shield (20) which does not comprise a circuit board (100) having a converter,
- wherein both the first non-drive end shield (20) and the second non-drive end shield (20) can be combined with the electric motor housing (30) to form an electric motor (10) in such a way that an electric motor (10) comprising the first non-drive end shield (20) is from the outside visually identical to an electric motor (10) comprising the second non-drive end shield (20).

8. Electric motor (10), comprising
- an electric motor housing (30), and
- connected thereto, a non-drive end shield (20) according to any of claims 1 to 6,
- wherein the electric motor (10) in particular has a number of stator coils comprising respective coil wires, wherein the coil wires are led through respective feedthroughs of the non-drive end shield (20) to corresponding connecting points on the circuit board (100).

## Revendications

1. Flasque côté B (20) pour un moteur électrique (10),
- une carte (100) étant intégrée dans le flasque côté B (20),
- un convertisseur étant formé sur la carte (100),
- le flasque côté B (20) comprenant un boîtier (21), qui constitue un boîtier de la carte (100), et
- la carte (100) étant divisée en une zone centrale (110) et un nombre de zones de dent (120) entourant la zone centrale (110), des plans des zones de dent (120) étant coudés par rapport à un plan de la zone centrale (110) dans une position de montage,
**caractérisé en ce que**
- la carte (100) comprend des emplacements de flexion (130) entre la zone centrale (110) et les zones de dent respectives (120), une zone de dent respective (120) étant mobile au moyen de l'emplacement de flexion associé (130) entre un état déployé, dans lequel le plan de la zone de dent respective (120) est parallèle au plan de la zone centrale (110), et un état coudé, dans lequel le plan de la zone de dent respective (120) est perpendiculaire au plan de la zone centrale (110), et
- le boîtier (21) comprend un nombre de nervures de refroidissement intérieures.

2. Flasque côté B (20) selon la revendication 1, **caractérisé en ce que**
- un condensateur de circuit intermédiaire (160) et/ou un module de puissance (170) sont agencés sur une zone de dent respective (120),
- le condensateur de circuit intermédiaire (160) et le module de puissance (170) étant de préférence agencés sur des côtés opposés de la zone de dent respective (120) à une position identique.

3. Flasque côté B (20) selon l'une quelconque des revendications précédentes, **caractérisé en ce que**
- la carte (100) est fixée au boîtier (21) au moyen d'un nombre d'éléments de fixation, notamment de vis, d'éléments de serrage à encliquetage automatique et/ou d'étriers de fixation en acier à ressorts.

4. Flasque côté B (20) selon l'une quelconque des revendications précédentes, **caractérisé en ce que**
- les zones de dent (120) de la carte (100) sont fixées de manière conductrice de chaleur au boîtier (21) avec un élément de fixation respectif (150).

5. Flasque côté B (20) selon l'une quelconque des revendications précédentes, **caractérisé en ce que**
- le boîtier (21) comprend un nombre de passages, notamment électriquement isolants, pour des fils de bobine, chaque passage conduisant d'un côté du boîtier, qui est tourné vers des bobines de stator du moteur électrique (10), à un emplacement de connexion associé sur la carte (100),
- les passages étant de préférence réalisés avec un rétrécissement conique vers l'emplacement de connexion.

6. Flasque côté B (20) selon l'une quelconque des revendications précédentes, **caractérisé en ce que**
- le boîtier (21) est rempli avec une masse de scellement enveloppant la carte (100).

7. Jeu de pièces de moteur, comprenant
- un boîtier de moteur électrique (30),
- un premier flasque côté B (20) selon l'une quelconque des revendications précédentes, et
- un deuxième flasque côté B (20), qui ne comprend pas de carte (100) munie d'un convertisseur,
- aussi bien le premier flasque côté B (20) que le deuxième flasque côté B (20) pouvant être assemblés avec le boîtier de moteur électrique (30) en un moteur électrique (10), de telle sorte qu'un moteur électrique (10) muni du premier flasque côté B (20) soit optiquement identique de l'extérieur à un moteur électrique (10) muni du deuxième flasque côté B (20).

8. Moteur électrique (10), comprenant
- un boîtier de moteur électrique (30), et
- un flasque côté B (20) selon l'une quelconque des revendications 1 à 6 connecté à celui-ci,
- le moteur électrique (10) comprenant notamment un nombre de bobines de stator munies de fils de bobine respectifs, les fils de bobine étant conduits à travers des passages respectifs du flasque côté B (20) à des emplacements de connexion correspondants sur la carte (100) .
